# FASCICULE DE BREVET EUROPEEN

(11) **EP 0 966 382 B1**
(45) Date de publication et mention de la délivrance du brevet: **19.06.2002**
(21) Numéro de dépôt: 98914925.7
(22) Date de dépôt: 16.03.1998
(51) Int. Cl.: B62J 9/00, B62J 23/00, B62J 35/00

(54) **HABILLAGE AMOVIBLE POUR RESERVOIR DE MOTO**
ABNEHMBARE VERKLEIDUNG FÜR MOTORRADTANK
REMOVABLE COVER FOR MOTORCYCLE FUEL TANK

(30) Priorité: 14.03.1997 FR 9703373
(43) Date de publication de la demande: 29.12.1999
(73) Titulaire: Moillo, Yves, 69007 Lyon (FR)
(72) Inventeur: Moillo, Yves, 69007 Lyon (FR)
(74) Mandataire: Thibault, Jean-Marc
(86) Numéro de dépôt international: FR9800525
(87) Numéro de publication internationale: WO9841440

(56) Documents cités:
- WO-A-96/00677
- DE-A- 3 125 460
- FR-A- 2 234 173
- US-A- 4 068 859

## Description

### DOMAINE TECHNIQUE :

L'invention concerne le domaine des accessoires pour motocyclettes et, plus particulièrement, des accessoires pour réservoir, réel ou factice, de moto, destinés à être utilisés sur une moto en mouvement et donc à subir des efforts dynamiques.

Le réservoir à essence d'une moto est, généralement, situé entre la selle et le guidon, au-dessus du moteur. Dans certains cas, pour des raisons techniques d'encombrement, le réservoir n'est pas situé à cette place, mais se trouve disposé sous la selle. La moto possède alors, pour des raisons esthétiques, entre la selle et le guidon, adapté sur son cadre au-dessus du moteur, un carter ou réservoir factice.

Compte tenu de sa position entre la selle et le guidon, un réservoir factice ou réel est susceptible de subir, du côté de la selle, des dégradations occasionnées par des pièces métalliques adaptées sur les vêtements d'un utilisateur de la moto ou motard. En effet, de telles pièces métalliques provoquent des rayures et des chocs qui altèrent l'aspect du revêtement du réservoir et contribuent à la dépréciation de la moto.

### TECHNIQUE ANTERIEURE :

Afin de remédier à ces risques de dégradation, l'art antérieur a proposé, par exemple, d'adapter, sur la partie du réservoir située à proximité de la selle, des habillages ou protections adhésives. Toutefois, ces protections, de par leur mode de fixation au moyen de colles, ne peuvent être ôtées ou remplacées sans occasionner une dégradation importante du revêtement du réservoir, de sorte qu'elles conduisent à un effet inverse de celui recherché par leur utilisation.

Il est également connu de mettre en oeuvre, une protection ou un habillage constitué par un tapis enveloppant fixé au moyen de sangles passant sous le réservoir. Un tel tapis est généralement réalisé en matériau textile, en cuir naturel ou synthétique, par l'assemblage cousu de pièces de différentes formes pour s'adapter à la conformation particulière du réservoir.

Le brevet US 4,068,859 décrit un exemple de tapis de réservoir ou habillage amovible souple présentant une partie centrale prolongée par deux parties terminales, de manière à envelopper le réservoir d'un bord à un bord opposé. Chaque partie terminale est pourvue d'une tringle de fixation destinée à recevoir au moins deux dispositifs de fixation communs aux deux tringles. Chacun des dispositifs communs de fixation est constitué par un collier indesserrable à crémaillère, adapté sur chacune des tringles en passant sous le réservoir pour, en étant serré, maintenir l'habillage souple sur le réservoir.

Si un tapis ou habillage souple des types précédents assure globalement sa fonction de protection du réservoir, il présente, néanmoins, des inconvénients inhérents à sa nature. Tout d'abord, sa structure, obtenue par l'assemblage cousu de différents éléments d'autant plus nombreux que la forme du réservoir est complexe. en rend la fabrication onéreuse. De plus, un tel tapis n'est pas à même d'assurer une protection efficace du réservoir contre les chocs importants. Enfin, la fixation du tapis par des sangles ou analogues n'est pas toujours aisée, en raison de l'encombrement de la région de la moto située sous le réservoir, au-dessus du moteur.

### EXPOSE DE L'INVENTION :

Compte tenu des inconvénients des habillages pour réservoirs de moto selon l'art antérieur, il est apparu le besoin de pouvoir disposer d'un nouvel habillage qui puisse être facilement adapté sur un réservoir de moto, sans colle, sans altération de ce dernier ou sans système complexe de sangles. Le besoin s'est fait également sentir d'un nouvel habillage qui soit également apte à assurer une protection efficace du réservoir contre certains chocs et qui ne présente pas, pour sa fabrication, un coût de main d'oeuvre élevé.

Un objectif de l'invention est de répondre à ces besoins en proposant un nouvel habillage amovible qui obvit aux inconvénients de l'art antérieur.

Un objet de l'invention est donc un habillage amovible pour un réservoir de moto, du type présentant une partie centrale prolongée par au moins deux parties terminales pour envelopper, au moins partiellement, la face supérieure du réservoir d'un bord à un bord opposé.

Selon l'invention, l'habillage amovible est constitué d'une coque sensiblement rigide présentant une face interne de forme sensiblement complémentaire de celle du réservoir et comportant, au niveau de chacune de ses parties terminales, des moyens indépendants de fixation pour assurer une immobilisation de la coque sur la moto.

Dans le domaine des accessoires pour réservoirs de moto, il existe, également, le besoin de pouvoir fixer sur le réservoir différents équipements tels que, par exemple, une sacoche ou un bagage apte à recevoir des effets du motard pendant ses déplacements.

L'art antérieur a proposé d'apporter une solution à ce problème en équipant de telles sacoches, dites de réservoir, d'aimants destinés à adhérer sur les réservoirs métalliques. Toutefois, les sacoches de réservoir à dispositif de fixation magnétique ne sont pas immobilisées de manière rigide sur le réservoir, de sorte qu'elles peuvent être décollées sous l'effet de la vitesse ou, encore, facilement arrachées par une personne mal intentionnée, notamment pendant un arrêt de courte durée en cours de voyage. De plus, lors de la mise en place de la sacoche, le système d'aimantation est susceptible d'occasionner des chocs pouvant dégrader la face supérieure du réservoir.

L'art antérieur a également proposé d'adapter une sacoche sur un tapis de réservoir, tel que décrit précédemment. Toutefois, en plus des inconvénients, déjà énoncés, inhérents à un tel tapis, l'adaptation de la sacoche sur le réservoir, par l'intermédiaire du tapis, n'offre pas une bonne tenue de cette dernière. En effet, compte tenu de la nature du tapis, la sacoche peut être amenée à effectuer des déplacements latéraux lorsque la moto prend des virages ou, encore, des déplacements longitudinaux lorsque la moto accélère ou freine. De tels déplacements intempestifs nuisent au confort de pilotage de la moto et contribuent à la fatigue du pilote.

Un document DE 31 25 460 a également proposé d'adapter une sacoche amovible de réservoir au moyen d'un dispositif de fixation comportant une plate-forme de réception pour la sacoche posée sur le haut du réservoir et maintenue en position par deux bras longitudinaux étroits, orientés, respectivement, vers l'avant et l'arrière de la moto. Le bras avant est fixé sur le réservoir, tandis que le bras arrière est fixé sur le cadre de la moto. Compte tenu de sa structure, un tel dispositif de fixation présente, également, l'inconvénient de ne pas assurer une immobilisation convenable de l'ensemble sacoche-dispositif de fixation qui peut alors effectuer des mouvements, latéraux notamment, à la suite des déplacements de la moto avec les effets, sur le confort de pilotage et la fatigue du pilote, évoqués précédemment, ainsi que le risque d'altérer la surface du réservoir.

Un autre objet de l'invention est justement de remédier aux inconvénients ci-dessus, en proposant un nouvel habillage de réservoir qui permet, notamment, une adaptation fiable et rigide d'un équipement sur le réservoir, sans risque de dégradations de ce dernier et en présentant un coût de fabrication qui inclut une faible part de main d'oeuvre.

Pour atteindre ces objectifs, selon un mode de réalisation préférable de l'invention, l'habillage amovible pour un réservoir de moto est constitué d'une coque sensiblement rigide présentant une face interne de forme sensiblement complémentaire de celle du réservoir, comportant, au niveau de chacune de ses parties terminales, des moyens indépendants de fixation, pour assurer une immobilisation de la coque sur la moto, et comprenant des moyens d'adaptation d'équipements divers, tels que, notamment, un bagage amovible.

Afin d'assurer une bonne stabilité de l'habillage amovible sur la moto en déplacement, la coque, constituant l'habillage, comporte, selon une caractéristique préférable de l'invention, des moyens d'immobilisation, au moins latérale, par emboîtement réciproque avec le réservoir.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES FIGURES :

La **fig. 1** est une perspective d'une forme préférée d'une coque rigide constitutive d'un habillage conforme à l'invention.
La **fig. 2** est une vue en perspective de la coque selon la **fig. 1** adaptée sur un réservoir de moto.
La **fig. 3** est une coupe longitudinale selon le plan **III-III** de la **fig. 2.**
La **fig. 4** est une perspective, analogue à la **fig. 2,** montrant l'habillage selon l'invention équipé d'un bagage amovible.
Les **fig. 5** et **6** sont des coupes longitudinales, sensiblement analogues à la **fig. 3**, montrant des variantes de réalisation de l'habillage conforme à l'invention.
Les **fig. 7** à **10** constituent des vues en perspectives analogues à la **fig. 1** montrant d'autres variantes de réalisation de l'objet de l'invention.
La **fig. 11** est une vue en perspective montrant une autre forme de réalisation d'un habillage selon l'invention adapté sur un réservoir de moto.

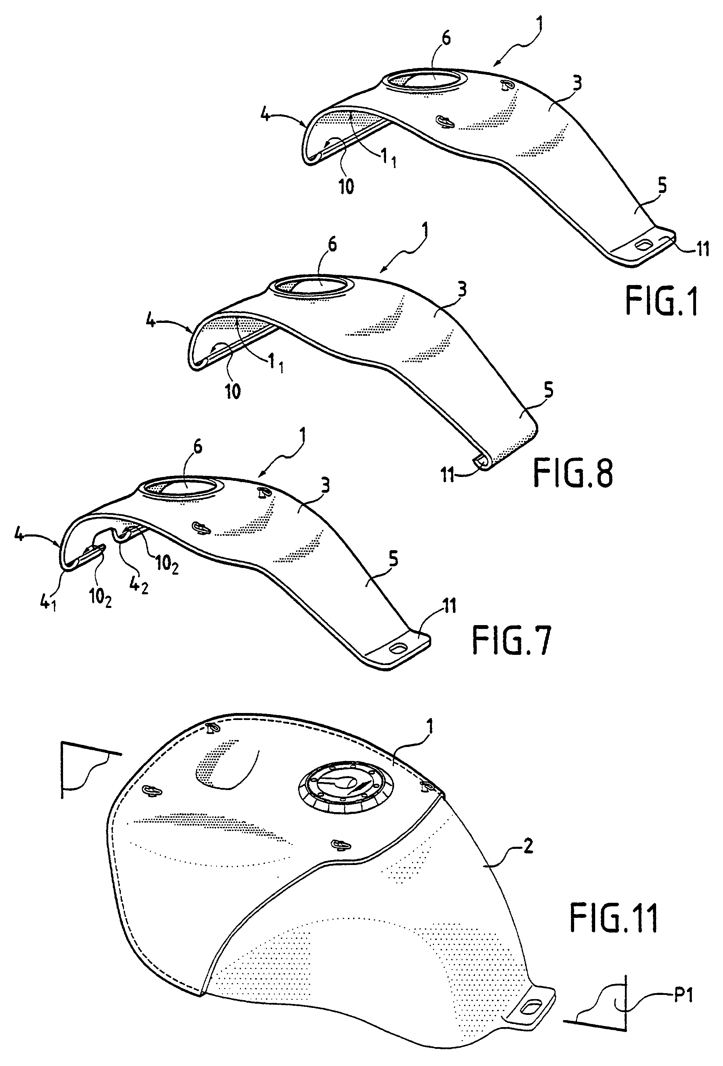

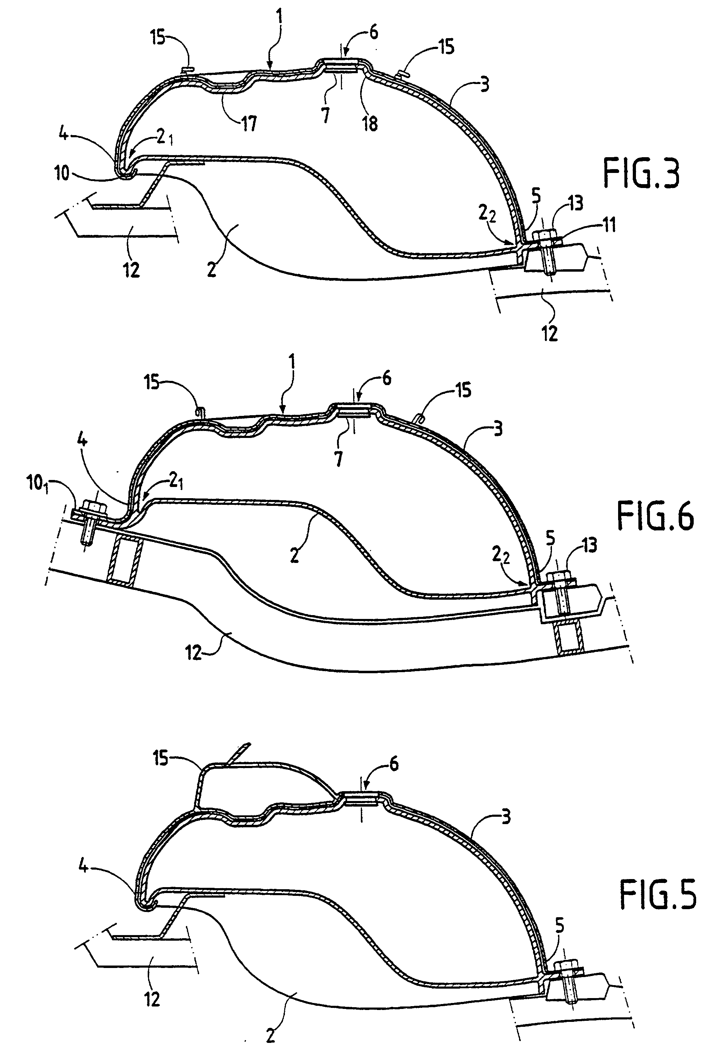

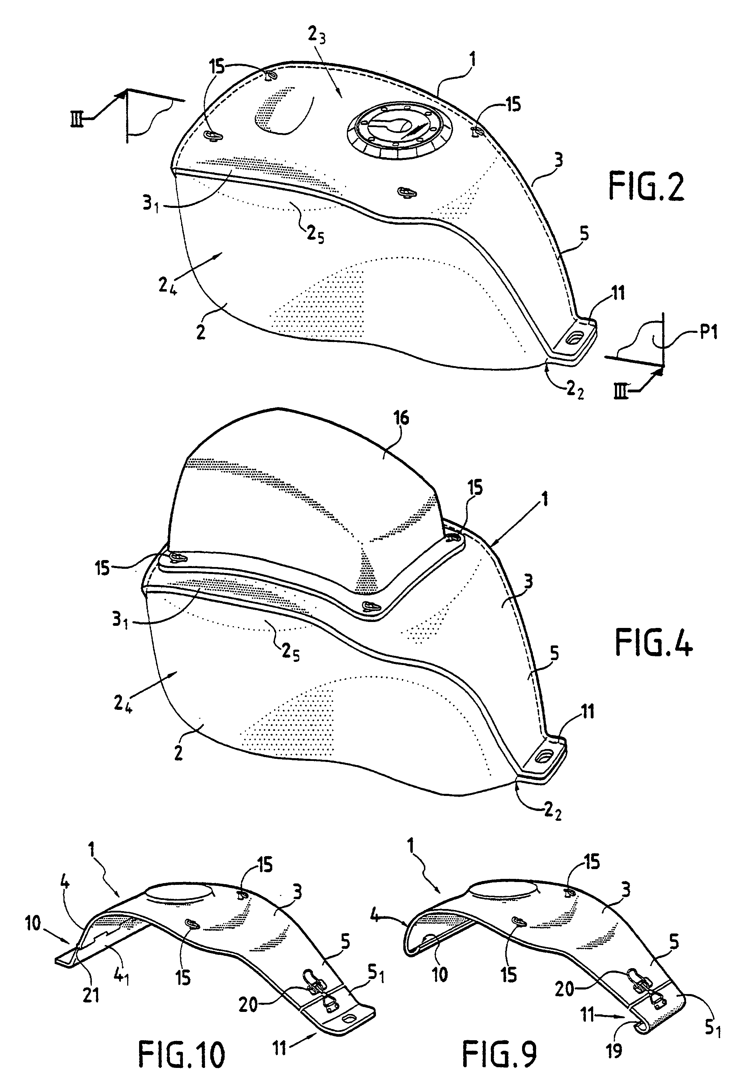

L'habillage amovible pour réservoir de moto, conforme à l'invention, est constitué d'une coque sensiblement rigide **1,** comme le montre la **fig. 1.** Cette coque **1** est destinée à envelopper, au moins partiellement, la face supérieure d'un réservoir de moto **2,** tel que cela est illustré à la **fig. 2.**

Selon une forme de réalisation préférée, plus particulièrement illustrée aux **fig. 1** à **4,** la coque sensiblement rigide **1** possède une partie centrale **3** de forme allongée. Cette partie centrale **3** de la coque **1** enveloppe une région du réservoir **2** médiane et sensiblement symétrique par rapport à un plan médian longitudinal **P**_{**1**}**.** La partie centrale **3** s'étend, comme cela apparaît en coupe selon le plan **P**_{**1**} à la **fig. 3,** d'un bord **2**_{**1**} à un bord opposé **2**_{**2**} du réservoir, de manière à comporter au moins deux parties terminales **4, 5** opposées et orientées, respectivement, vers l'avant et l'arrière de la moto. La partie terminale arrière **5** se trouve, plus particulièrement, à proximité de la selle, non représentée, de la moto. La coque **1** présente, au niveau de sa partie centrale, un passage **6** destiné à permettre l'accès à un orifice **7** de remplissage du réservoir **2.** Afin de permettre une immobilisation de la coque **1** sur la moto, chacune des deux parties terminales **4, 5** est pourvue de moyens de fixation distincts ou indépendants, respectivement **10** et **11.** Les moyens de fixation **10, 11** sont qualifiés de distincts ou d'indépendants par opposition à des moyens de fixation qui seraient reliés sous le réservoir **2,** comme par exemple au moyen d'une sangle ou analogue.

Selon l'exemple illustré, les moyens de fixation **10,** équipant la partie terminale avant **4,** sont réalisés sous la forme d'une gorge constituée par un retour de la coque **1** et destinée à être engagée sur un bord saillant **2**_{**1**} du réservoir. Les moyens de fixation **11** au niveau de la partie terminale arrière **5** sont, selon cet exemple. constitués par une patte percée pour être assujettie sur la moto et, plus particulièrement, sur une partie **12** de son cadre, représentée schématiquement, au moyen d'une vis de fixation **13** du réservoir.

De manière préférée, la coque **1** est conformée pour présenter une face interne **1**_{**1**} de forme sensiblement complémentaire à celle de la partie du réservoir avec laquelle elle est maintenue en contact par les moyens de fixation **10** et **11** qui assurent, de manière préférée mais non nécessairement, une mise en tension de la coque **1.** A cette fin, et dans l'exemple de réalisation illustré à la **fig. 3,** la longueur développée de la face interne **1**_{**1**} est légèrement inférieure à celle de la face en regard du réservoir, de sorte que, lors du serrage de la vis **13,** la patte **11** exerce une traction sur la coque **1,** par ailleurs accrochée sur le réservoir par la gorge **10,** au niveau de la partie terminale avant **4.** Afin de ne pas altérer ou mater la surface du réservoir avec laquelle elle est en contact, la face interne **1**_{**1**} possède, de préférence, un revêtement de protection anti-rayure comme, par exemple, une nappe de textile contre-collée, un flocage, une enduction d'un matériau synthétique approprié ou analogue. De plus, le matériau de ce revêtement de protection peut être choisi pour présenter, également, une fonction d'amortissement anti-vibration.

Enfin, la coque **1** possède des moyens d'adaptation **15** d'équipements divers, tels que, par exemple, un bagage ou sacoche de réservoir **16** amovible, comme illustré à la **fig. 4.** Selon cet exemple, les moyens d'adaptation **15** sont constitués par quatre systèmes d'immobilisation temporaire, dits à tourniquet, destinés à coopérer avec des boutonnières à oeillets ménagées dans une base de la sacoche **16.** Les moyens **15** sont, de préférence mais non exclusivement, disposés de manière à placer le bagage **16** sur le dessus du réservoir vers l'avant pour laisser dégagée la partie arrière de la coque **1** et du réservoir **2** située à proximité de la selle de la moto.

De par sa constitution, la coque sensiblement rigide selon l'invention forme un habillage amovible pour réservoir de moto, facile à mettre en place ou à retirer, sans altérer le réservoir. De plus, les moyens indépendants de fixation **10** et **11** assurent une immobilisation rigide de la coque sur la moto, notamment, selon l'exemple illustré, en la plaquant pour maintenir sa face interne **1**_{**1**} en contact contre la face supérieure du réservoir **2.** De manière générale, cette face supérieure présente une conformation convexe mais peut, cependant, comporter des dépressions concaves **17** ou des bossages **18.** La coque **1** met alors à profit, par sa face interne **1**_{**1**} de forme complémentaire à celle du réservoir **2,** ces déformations locales **17, 18,** pour assurer, par emboîtement réciproque avec le réservoir, son immobilisation tant latérale que longitudinale en complément de l'assujettissement effectué par les moyens indépendants d'immobilisation **10** et **11.** La coque **1** est ainsi, avantageusement, apte à supporter une charge importante contenue dans le bagage amovible **16,** sans connaître de déplacement sous l'effet d'accélérations linéaires ou centrifuges de la moto.

De même, la coque **1** présente, de manière préférée mais non nécessaire, une extension suffisante pour envelopper une région médiane **2**_{**3**} du réservoir, ainsi qu'une partie au moins des flancs **2**_{**4**} bordant celle-ci, et présenter alors, compte tenu de la rigidité de la coque et de la complémentarité des formes de la coque et du réservoir, des moyens d'immobilisation, au moins latérale, par emboîtement réciproque avec le réservoir. Ainsi, comme cela ressort plus particulièrement de la **fig. 2,** le réservoir présente, en bordure de sa région médiane **2**_{**3**} et de part et d'autre de celle-ci, un flanc **2**_{**4**} qui comporte une zone de raccordement avec la région médiane et, selon l'exemple illustré, une zone méplate **2**_{**5**}**.** La coque **1** comporte alors, en bordure de sa partie centrale **3** et de chaque côté de celle-ci, une sorte de bord tombé **3**_{**1**} qui enveloppe, en partie au moins, le flanc **2**_{**4**} et, plus particulièrement, la zone de raccordement et la zone méplate **2**_{**5**} correspondantes. Les deux bords tombés **3**_{**1**}**,** contribuant à l'emboîtement des surfaces congruentes de la coque **1** et du réservoir **2,** forment des moyens d'immobilisation au moins latérale de l'habillage et augmentent la stabilité de celui-ci lors des mouvements de la moto. Il est à noter que les zones de la face interne **1**_{**1**}**,** complémentaires des déformations ou conformations locales **17, 18** du réservoir, constituent également des moyens d'immobilisation, au moins latérale, par emboîtement.

La coque selon l'invention est constituée par un voile de matériau sensiblement rigide ou semi-rigide, de toute nature appropriée, telle que, par exemple, du métal, des matières plastiques, des matériaux composites, du bois lamellé collé ou analogues.

De manière préférée, la coque **1** est fabriquée en tissu de carbone imprégné et formée dans un moule femelle obtenu à partir d'une empreinte partielle du réservoir sur lequel doit être adaptée la coque **1.** Ce mode de fabrication présente l'avantage de permettre une exécution rapide de la coque **1,** sans entraîner un coût de main d'oeuvre important.

La conception de la coque **1** se prête également à une fabrication par moulage-injection de matière thermoplastique ou par emboutissage de tôles métalliques. Ces procédés permettent de réduire les coûts de fabrication, lors d'une production en moyenne ou grande série.

Dans l'exemple ci-dessus, les moyens d'adaptation **15** d'équipements divers sont constitués par des systèmes d'adaptation d'un bagage amovible. Toutefois, les moyens **15** pourraient être formés par un caisson faisant partie intégrante de la coque **1,** comme le montre la **fig. 5** qui présente une coque par ailleurs identique à celle décrite en relation avec les **fig. 1** à **4.** Bien entendu, ces moyens d'adaptation **15** pourraient être constitués par tout dispositif approprié, permettant la fixation définitive ou temporaire d'équipements divers, tels que des instruments de communication, d'aide à la navigation ou analogues.

La **fig. 6** illustre une variante de réalisation qui diffère de la forme préférée de la coque **1** présentée en relation avec la **fig. 1,** en ce que les moyens de fixation **10** au niveau de la partie terminale avant **4** sont constitués par au moins une et, de préférence, deux pattes **10**_{**1**} destinées à être fixées sur une partie du cadre **12** de la moto.

Selon cette variante, les moyens **15** d'adaptation d'un bagage amovible sont constitués par des crochets mais ils pourraient être constitués par tout dispositif de bouclerie approprié.

La **fig. 7** illustre une variante de réalisation de la coque **1** comportant une partie terminale avant **4** formée par deux branches **4**_{**1**} et **4**_{**2**}**,** chacune pourvue d'une gorge **10**_{**2**} destinée à être engagée sur un bord saillant du réservoir. Selon cette variante, les moyens de fixation **11** de la partie terminale arrière **5** sont formés par une patte destinée à être fixée sur le cadre de la moto.

La **fig. 8** montre une autre variante de réalisation de la coque **1.** Selon cette variante, la partie centrale **3** de la coque est dépourvue de moyens d'adaptation d'équipements divers et les moyens de fixation **10, 11,** au niveau des parties terminales avant **4** et arrière **5,** sont constitués par des gorges, chacune destinée à être engagée sur un bord saillant du réservoir **2.** Afin de permettre une adaptation de la coque **1** sur le réservoir **2,** puis une immobilisation de cette dernière, le fond de l'une au moins des gorges est pourvu d'une garniture élastiquement déformable, telle que, par exemple, un cordon de caoutchouc siliconé.

La coque **1** ainsi constituée est alors adaptée sur le réservoir **2** en engageant la gorge pourvue de la garniture élastiquement déformable, puis en comprimant cette dernière pendant l'engagement de la seconde gorge. Après relâchement de la contrainte et sous l'effet de l'élasticité de la garniture, la coque **1** est maintenue plaquée sur le réservoir **2.** La coque selon cette autre variante possède une fonction de protection du réservoir mais offre, également, une surface apte à recevoir un motif décoratif.

La **fig. 9** illustre une autre variante de réalisation de la coque **1** selon laquelle la partie terminale avant **4** est pourvue d'une gorge **10,** tandis que la partie terminale arrière est équipée de moyens de fixation **11** constitués par un prolongement indépendant **5**_{**1**} portant une gorge **19** destinée à être engagée sur un bord saillant du réservoir. La partie terminale **5** et son prolongement **5**_{**1**} sont reliés par au moins un dispositif **20** de fermeture à levier et genouillère, qui permet une immobilisation rigide par une mise en tension de la coque **1** lorsque les gorges **10** et **19** sont engagées sous des bords saillants du réservoir.

Bien entendu, le dispositif **20** pourrait être remplacé par tout autre système de serrage rigide apte à assurer une mise en tension de la coque **1.**

Enfin, dans cet exemple, la partie centrale **3** ne présente pas de passage d'accès à un orifice de remplissage du réservoir.

Selon la variante de réalisation de l'invention présentée à la **fig. 10,** la partie terminale avant **4** est équipée de moyens de fixation **10** formés par un prolongement **4**_{**1**} relié à la partie terminale par une articulation rigide **21,** telle que par exemple une charnière. Le prolongement **4**_{**1**} comporte une patte destinée à être fixée sur le cadre de la moto. Par ailleurs, les moyens de fixation **11,** équipant la partie terminale arrière **5,** diffèrent de ceux décrits en relation avec la **fig. 9** en ce que le prolongement **5**_{**1**} est pourvu d'une patte, également destinée à être fixée sur le cadre de la moto.

La coque **1** ainsi constituée permet d'accéder à un orifice de remplissage du réservoir en relevant vers l'avant la partie centrale **3** après ouverture du dispositif de fermeture à levier et genouillère **20.** Une telle disposition est particulièrement avantageuse lorsque la coque **1** ne présente pas de passage d'accès à cet orifice ou lorsque le passage d'accès est obturé par un bagage, non représenté, fixé sur les moyens d'adaptation **15.**

Bien entendu, les positions respectives de l'articulation **21** et du dispositif **20** pourraient être interverties, de sorte que la partie centrale se relèverait vers l'arrière de la moto, en direction de la selle.

La **fig. 11** illustre une autre forme de réalisation de la coque **1** selon l'invention qui enveloppe partiellement le réservoir **2,** de l'un à l'autre de deux bords, situés de part et d'autre du plan médian longitudinal **P**_{**1**}**,** sans envelopper la partie du réservoir orientée vers l'arrière. Chacune des parties de la coque **1,** située au niveau des bords du réservoir, sont équipées de moyens indépendants de fixation permettant une immobilisation rigide amovible de la coque **1** directement sur le réservoir ou sur la moto. Selon l'exemple illustré à la **fig. 11,** la coque **1** présente une extension suffisante, ou assure un enveloppement suffisant du réservoir, pour permettre un emboîtement de l'habillage et du réservoir, et définir ainsi des moyens d'immobilisation latérale, mais également longitudinale, de l'habillage sur la moto, en complément des moyens de fixation.

Selon une autre forme de réalisation non représentée, la coque **1** enveloppe complètement la partie supérieure du réservoir. Quelle que soit la forme particulière de la partie enveloppée du réservoir réel ou factice, la coque **1** comporte les moyens de fixation, de préférence rigides, nécessaires pour permettre son immobilisation temporaire sur la moto, sans dégradation de cette dernière. Ces moyens de fixation définissent, de préférence, des points d'accrochage de la coque **1** qui forment les sommets d'un polygone convexe symétrique par rapport au plan médian longidudinal **P**_{**1**}**.**

Selon l'invention, les moyens de fixation de la coque **1** peuvent être réalisés de toute autre manière appropriée et faire, notamment, intervenir toute combinaison des moyens décrits précédemment. Selon une variante non représentée, les moyens de fixation peuvent mettre en oeuvre des vis de pression destinées à venir en appui sur une face inférieure du réservoir en étant, par exemple, calées derrière un bord saillant.

### POSSIBILITE D'APPLICATION INDUSTRIELLE :

L'invention trouve une application dans les articles pour moto et, plus particulièrement, dans les habillages pour réservoir de moto.

## Revendications

1. Habillage amovible pour un réservoir **(2)** de moto, du type présentant une partie centrale **(3)** prolongée par au moins deux parties terminales **(4, 5)** pour envelopper, au moins partiellement, le réservoir d'un bord **(2**_{**1**}**)** à un bord opposé **(2**_{**2**}**),**
**caractérisé en ce qu'**il est constitué d'une coque sensiblement rigide **(1)** présentant une face interne de forme sensiblement complémentaire de celle du réservoir **(2)** et comportant, au niveau de chacune de ses parties terminales **(4, 5),** des moyens indépendants de fixation **(10, 11)** pour assurer une immobilisation de la coque sur la moto.

2. Habillage amovible selon la revendication 1, **caractérisé en ce que** la coque **(1)** présente des moyens d'immobilisation, au moins latérale, par emboîtement réciproque avec le réservoir.

3. Habillage amovible selon la revendication 1 ou 2, **caractérisé en ce que** la coque **(1)** est destinée à être plaquée sur le réservoir par les moyens de fixation **(10, 11)** qui assurent une mise en tension de la coque **(1).**

4. Habillage amovible selon l'une des revendications 1 à 3, **caractérisé en ce que** la partie centrale **(3)** de la coque possède une forme allongée, conformée pour envelopper une région médiane du réservoir sensiblement symétrique par rapport à un plan médian longitudinal **(P**_{**1**}**),** et au moins deux parties terminales opposées dont l'une **(4)** est destinée à être dirigée vers l'avant de la moto et l'autre **(5)** vers l'arrière.

5. Habillage selon l'une des revendications 1 à 4, **caractérisé en ce que** les moyens de fixation **(10, 11)** comprennent au moins une gorge destinée à être engagée sur un bord saillant du réservoir.

6. Habillage selon l'une des revendications 1 à 5, **caractérisé en ce que** les moyens de fixation **(10, 11)** comprennent au moins une patte destinée à être fixée sur la moto.

7. Habillage selon la revendication 4, **caractérisé en ce que** les moyens de fixation au niveau d'une partie terminale sont constitués par une gorge **(10)** destinée à être engagée sur un bord saillant du réservoir et au niveau de la partie terminale opposée par au moins une patte **(11)** destinée à être fixée sur la moto.

8. Habillage selon l'une des revendications 1 à 7, **caractérisé en ce que** la coque **(1)** possède un passage **(6)** destiné à permettre l'accès à un orifice de remplissage du réservoir **(2)**.

9. Habillage selon l'une des revendications 1 à 8, **caractérisé en ce que** la coque **(1)** possède des moyens d'adaptation **(15)** d'équipements divers.

10. Habillage selon l'une des revendications 1 à 9, **caractérisé en ce que** la coque **(1)** possède des moyens d'adaptation **(15)** d'un bagage amovible **(16)**.

## Claims

1. A removable cover for a motorcycle tank (2), the cover being of the type having a central portion (3) extended by at least two end portions (4, 5) for enveloping at least a part of the tank from one edge (2₁) to an opposite edge (2₂),
the cover being **characterized in that** it is constituted by a substantially rigid shell (1) having an inside face of a shape that is substantially complementary to the shape of the tank (2) and including, at each of its end portions (4, 5), independent fixing means (10, 11) for preventing the shell from moving relative to the motorcycle.

2. A removable cover according to claim 1, **characterized in that** the shell (1) presents means for preventing it from moving, at least laterally, by mutual engagement between the shell and the tank.

3. A removable cover according to claim 1 or 2, **characterized in that** the shell (1) is designed to be pressed against the tank by fixing means (10, 11) which put the shell (1) under tension.

4. A removable cover according to any one of claims 1 to 3, **characterized in that** the central portion (3) of the shell is of elongate shape, shaped to envelop a middle region of the tank that is substantially symmetrical about a longitudinal midplane (P₁), and at least two opposite end portions, one of which (4) is designed to be directed towards the front of the motorcycle and the other of which (5) is designed to be directed towards the back thereof.

5. A cover according to any one of claims 1 to 4, **characterized in that** the fixing means (10, 11) comprise at least one groove designed to be engaged over a projecting edge of the tank.

6. A cover according to any one of claims 1 to 5, **characterized in that** the fixing means (10, 11) comprise at least one tab designed to be fixed on the motorcycle.

7. A cover according to claim 4, **characterized in that** the fixing means at one of the end portions are constituted by a groove (10) designed to be engaged on a projecting edge of the tank, and at the opposite end portion are constituted by a tab (11) designed to be fixed to the motorcycle.

8. A cover according to any one of claims 1 to 7, **characterized in that** the shell (1) possesses a passage (6) designed to give access to an orifice for filling the tank (2).

9. A cover according to any one of claims 1 to 8, **characterized in that** the shell (1) possesses means (15) for fitting various items of equipment.

10. A cover according to any one of claims 1 to 9, **characterized in that** the shell (1) possesses means (15) for fitting a removable bag (16).

## Patentansprüche

1. Abnehmbare Verkleidung für einen Motorradtank (2), von der Art mit einem Mittelteil (3), der durch wenigstens zwei Endteile (4, 5) verlängert ist, um den Tank wenigstens teilweise von einem Rand (2₁) zu einem gegenüberliegenden Rand (2₂) zu umgeben,
**dadurch gekennzeichnet, daß** sie von einer im wesentlichen starren Schale (1) gebildet ist, die eine Innenseite aufweist, deren Form im wesentlichen komplementär zu der des Tanks (2) ist, und die in Höhe eines jeden ihrer Endteile (4, 5) separate Befestigungsmittel (10, 11) umfaßt, um eine Fixierung der Schale auf dem Motorrad zu gewährleisten.

2. Abnehmbare Verkleidung nach Anspruch 1,
**dadurch gekennzeichnet, daß** die Schale (1) Mittel zum zumindest seitlichen Fixieren durch gegenseitiges Einpassen mit dem Tank aufweist.

3. Abnehmbare Verkleidung nach Anspruch 1 oder 2,
**dadurch gekennzeichnet, daß** die Schale (1) dazu bestimmt ist, durch die Befestigungsmittel (10, 11), die ein Spannen der Schale (1) gewährleisten, an den Tank gedrückt zu werden.

4. Abnehmbare Verkleidung nach einem der Ansprüche 1 bis 3,
**dadurch gekennzeichnet, daß** der Mittelteil (3) der Schale eine langgestreckte Form aufweist, die so ausgebildet ist, daß ein bezüglich einer längsgerichteten Mittelebene (P₁) im wesentlichen symmetrischer mittlerer Bereich des Tanks und wenigstens zwei sich gegenüberliegende Endteile umgeben werden, von denen einer (4) dazu bestimmt ist, am Motorrad nach vorne zu weisen, und der andere (5) nach hinten.

5. Verkleidung nach einem der Ansprüche 1 bis 4,
**dadurch gekennzeichnet, daß** die Befestigungsmittel (10, 11) wenigstens eine Rille umfassen, die dazu bestimmt ist, mit einem vorstehenden Rand des Tanks in Eingriff zu treten.

6. Verkleidung nach einem der Ansprüche 1 bis 5,
**dadurch gekennzeichnet, daß** die Befestigungsmittel (10, 11) wenigstens eine Pratze umfassen, die dazu bestimmt ist, an dem Motorrad befestigt zu werden.

7. Verkleidung nach Anspruch 4,
**dadurch gekennzeichnet, daß** die Befestigungsmittel in Höhe eines Endteils von einer Rille (10) gebildet werden, die zum Umgreifen eines vorstehenden Randes des Tanks vorgesehen ist, und in Höhe des gegenüberliegenden Endteils von wenigstens einer Pratze (11), die zum Befestigen am Motorrad vorgesehen ist.

8. Verkleidung nach einem der Ansprüche 1 bis 7,
**dadurch gekennzeichnet, daß** die Schale (1) einen Durchlaß (6) aufweist, der dazu bestimmt ist, Zugriff auf einen Einfüllöffnung des Tanks (2) zu gewähren.

9. Verkleidung nach einem der Ansprüche 1 bis 8,
**dadurch gekennzeichnet, daß** die Schale (1) Mittel (15) zum Anbringen verschiedener Ausrüstungsteile aufweist.

10. Verkleidung nach einem der Ansprüche 1 bis 9,
**dadurch gekennzeichnet, daß** die Schale (1) Mittel (15) zum Anbringen eines abnehmbaren Gepäckstücks (16) aufweist.
